# EUROPEAN PATENT SPECIFICATION

(11) **EP 3 550 990 B1**
(45) Date of publication and mention of the grant of the patent: **18.02.2026**
(21) Application number: 17817928.9
(22) Date of filing: 06.12.2017
(51) Int. Cl.: A23B 4/027, A23B 4/20, A23B 2/754, A23L 13/40

(54) **MEAT TREATMENT COMPOSITION AND USE THEREOF**
FLEISCHBEHANDLUNGSZUSAMMENSETZUNG UND VERWENDUNG DAVON
COMPOSITION DE TRAITEMENT DE LA VIANDE ET SON UTILISATION

(30) Priority: 06.12.2016 EP 16202436; 06.12.2016 US 201662430729 P
(43) Date of publication of application: 16.10.2019
(73) Proprietor: PURAC Biochem BV, 4206 AC Gorinchem (NL)
(72) Inventor: HILHORST, Gerrit Anthon Rene, 4206 AC Gorinchem (NL); VERHEEZEN, Jacobus Johannes Adriana Maria, 4206 AC Gorinchem (NL); PRITAWARDANI, Prita, 4206 AC Gorinchem (NL); KUMAR, Saurabh, 4206 AC Gorinchem (NL)
(74) Representative: Nederlandsch Octrooibureau
(86) International application number: PCT/NL2017/050816
(87) International publication number: WO 2018/106109

(56) References cited:
- WO-A1-2014/021719
- WO-A1-2016/100299
- US-A- 2 823 132
- US-A1- 2008 305 213
- US-A1- 2010 310 738
- US-A1- 2011 300 591
- US-A1- 2012 027 896
- LINDSEY M. MCDONNELL ET AL: "Identifying Ingredients That Delay Outgrowth of Listeria monocytogenes in Natural, Organic, and Clean-Label Ready-to-Eat Meat and Poultry Products", JOURNAL OF FOOD PROTECTION, vol. 76, no. 8, 1 August 2013 (2013-08-01), US, pages 1366 - 1376, XP055689327, ISSN: 0362-028X, DOI: 10.4315/0362-028X.JFP-12-501
- SEBRANEK ET AL: "Cured meat products without direct addition of nitrate or nitrite: what are the issues?", MEAT SCIENCE, ELSEVIER SCIENCE, GB, vol. 77, no. 1, 23 June 2007 (2007-06-23), pages 136 - 147, XP022126947, ISSN: 0309-1740, DOI: 10.1016/J.MEATSCI.2007.03.025

## Description

### FIELD OF INVENTION

This invention relates to a meat treatment composition for increasing the resistance of meat to microbial spoilage and/or for enhancing reddening of meat and/or for reducing moisture loss incurred during cooking, refrigerating, freezing, thawing and/or storage of meat. Treatment of meat with compositions of the invention as well as a method of producing a meat treatment composition constitute part of the invention as well.

### BACKGROUND OF THE INVENTION

Industrial processing of meat for human consumption usually aims to provide (processed) meat products that combine an appealing appearance and flavor with microbial safety and prolonged shelf-life. Consumers evaluate meat products on the basis of a number of sensory attributes. Color, juiciness, flavor, and tenderness are believed to represent the most relevant sensory attributes of processed meat products.

Color formation and color stability are amongst the most critical quality traits of processed meat products and thus of great importance to the meat industry. The characteristic cured color can be derived from the concentration of heme pigments (myoglobin, hemoglobin), their chemical states and additives such as nitrogen oxides and reducing agents. In standard fermented meat products, such as salami, the characteristic cured color is a result of the chemical reaction between compounds derived from added nitrite/nitrate and the naturally occurring red myoglobin leading to the simultaneous formation of the bright red nitrosylmyoglobin, in which an axial ligand nitric oxide (NO) is coordinated to the central Fe²⁺ in heme. Well known additives for fresh meat include nitrates and nitrites, which give meat a pink or red color. Nitrate (NO₃⁻), generally supplied by sodium nitrate or potassium nitrate, is used as a source for nitrite (NO₂⁻).

Meat spoilage and rancidity affects not only appearance and/or sensory attributes, but also safety. Unwanted growth of certain aerobic and anaerobic bacteria that contaminate the meat during processing are the main cause. In principle, measures to preserve meat by elimination of bacteria or at least reducing outgrowth thereof, have been known (and practiced) for ages. Early preservation techniques of meat mainly involved drying, storing in salt (pickling), smoking, fermenting and/or (pre-) cooking. These processing methods, while effective for preserving the meat and preventing it from becoming spoiled or rancid, drastically change the overall visual and sensorial characteristics of the meat products. In more modern times, freezing has become a common and effective way to retard the growth of bacteria that may be present on the surface of meat. However, by freezing a meat product, water within the meat crystallizes, causing the denaturing of proteins and other damage to the meat on a cellular level. The texture, consistency and taste of thawed frozen meat is inferior compared to fresh meat. Consumers are accustomed to and often demand the sensorial quality (taste and texture) of non-preserved meat. Keeping the meat under refrigeration temperatures only is much less detrimental to the quality of the meat and therefore is the preferred option. The obvious down-side of keeping meat under refrigeration temperatures is that it is less effective in slowing down or preventing bacterial outgrowth. It has therefore often been attempted to apply additives or preservatives to further enhance the shelf-life of refrigerated meat products. Nitrates and nitrites help to inactivate bacteria but at levels much higher than those required to produce other cured meat characteristics.

Despite of its numerous desired properties (color formation, microbiologic safety), the safety of nitrite to human health has been questioned. Nitrite can cause the formation of unwanted compounds in cured meat, like N-nitrosamines which are questionable in regard to health. These compounds can be formed in principle due to the reaction of nitrite with secondary amines and amino acids in muscle proteins as well as in the gastrointestinal tract. Consumers are becoming increasingly aware of these safety issues. Consequently, food manufacturers are looking to replace part or all of the nitrite with other, more natural-like, food ingredients. Accordingly, a need exists for improved products for increasing the resistance of meat to microbial spoilage and/or for enhancing reddening of meat, while at the same time supporting a more "clean and consumer friendly" label statement.

US 2011/0300591 describes a method for converting nitrates to nitrites, wherein nitrates are converted to nitrites by bacteria belonging to the *Staphylococcus vitulinus* specie having nitrate reductase activity (NRA) , in the presence of lactic acid bacteria, at a pH comprised between 5.2 and 9. The nitrates may be contained in a liquid buffer preparation, i.e. a neutral medium containing nitrates which have been recovered after extraction from a natural source of nitrates, such as, a leek or spinach leaf, a fragment of celery, of onion or of cabbage, etc.

US 2012/027896 describes a method of treating a fresh meat product, comprising:
- infusing the fresh meat product with a solution including a source of sodium nitrite or sodium nitrate to create a treated fresh meat product; and
- packaging the treated fresh meat product in a low to no oxygen packaging,
wherein the treated fresh meat product has a fresh meat color before cooking and a uniform, uncured cooked color after cooking to done. The source of the sodium nitrite or sodium nitrate is preferably a natural source such as vegetable powders. An example of a natural source of sodium nitrite or sodium nitrate that could be used is VEG STABLE^{™} 504, manufactured by Florida Food Products, Inc. of Eustis, Florida, or other vegetable based ingredients containing nitrites or fermented nitrates.

WO 2016/100299 describes a process for treating an animal muscle portion to form an enhanced muscle portion comprising:
- providing a comminuted meat emulsion having a pH of from about 6.5 to about 9.5, the comminuted meat emulsion being prepared from a first animal muscle tissue; and
- adding the comminuted meat emulsion to an animal muscle portion in a manner that promotes uptake and/or distribution of the comminuted meat emulsion into the animal muscle portion to form an enhanced muscle portion. The examples describe comminuted meat emulsion containing celery powder (Veg Stable 504).

US 2010/310738 A1 details a method to improve water retention, enhance flavor and color, while preserving meat and preventing bacterial contamination. The method includes: (a) providing a body of meat at a first temperature; (b) contacting the body of meat of step (a), in at least one treating vessel, with a brine solution at a second temperature, wherein the second temperature is greater than the first temperature, and wherein the brine solution comprises a vinegar-derived food additive and/or a reddening agent, wherein the reddening agent comprises nitrite; (c) agitating the body of meat at the second temperature for a time sufficient to distribute the solution throughout the body of meat; (d) cooling the body of meat in at least one cooling vessel to a third temperature, wherein the third temperature is less than the second temperature; (e) agitating the body of meat at the third temperature; (f) contacting the body of meat of step (e) with the brine solution at the third temperature and agitating the body of meat at the third temperature until the brine solution is substantially absorbed by the body of meat; and (g) recovering the body of meat in a dry state at the third temperature.

*McDonnell et al. (2013)* describes a study that was conducted to identify ingredients that inhibit *Listeria monocytogenes* in natural, organic, or clean-label ready-to-eat meat and poultry products. Table 1 of *McDonnell et al. (2013)* describes the results of a test in which turkey slurries were combined with uncured, alternative or traditional-curing systems and supplemented with antimicrobial ingredients, such as 2.00% buffered vinegar (BV). One of the alternative curing systems used ('preconverted') contained 0.3 wt.% VegeStable 504 (15,000 ppm of nitrite) and 0.2 wt.% VegStable 515 (cherry powder).

US 2823132A describes brine compositions for curing meat products, in particular liquid compositions containing nitrite salt and a form of an ascorbic acid. In particular, it is concerned with minimizing the adverse effects of ascorbic acid on the stability of nitrite salt in such compositions.

It is the objective of the present invention to provide compositions, which can be used in meat treatment in order to achieve one or more of the aforementioned objectives, which compositions have been formulated as a concentrated liquid and show good stability during storage.

### SUMMARY OF THE INVENTION

The present inventors surprisingly found that this can be accomplished with concentrated liquid meat treatment compositions comprising a combination of a buffered food acid component in the form of partially or completely neutralized acetic acid; and a nitrite source in the form of a cultured vegetable extract that is obtained by inoculating a liquid vegetable extract selected from vegetable juice and vegetable juice concentrate with one or more micro-organisms capable of converting nitrate to nitrite. The meat treatment compositions of the present invention exhibit excellent shelf stability in that nitrite content of the composition remains constant for a prolonged period of time.

The present compositions are based on ingredients that, depending on the forms in which they are provided, can be labeled as 'natural ingredients'. The meat treatment composition of the present invention not only can be applied to increase the resistance of meat to microbial spoilage and/or to enhance the reddening of meat and/or to decrease moisture loss incurred during cooking, refrigerating, freezing thawing and/or storage of meat, but is also highly advantageous in view of food regulations and labeling requirements.

A particularly beneficial finding underlying the present invention is that the combination of the partially/completely neutralized acetic acid with the cultured vegetable extract as a single concentrated liquid product enhances the (chemical) stability of the preservative composition, notably of the nitrite *per se.* As is illustrated in the examples, the nitrite content in the concentrated compositions of the invention is more stable, under various storage conditions, than that of nitrite containing curing agents not comprising the neutralized acetic acid. Naturally, it is an additional advantage for meat processors to be able to store sizable amounts of a curing agent without concerns as to the level of activity at the time of use.

Hence, the invention provides concentrated liquid meat treatment compositions comprising such combinations of neutralized acetic acid and cultured vegetable extract; methods involving the treatment of meat with said compositions; as well as methods for producing such liquid meat treatment compositions.

### DETAILED DESCRIPTION OF THE INVENTION

Hence, a first aspect of the invention concerns a meat treatment composition comprising:
a) a buffered food acid component, comprising a total amount of partially or completely neutralized acetic acid of 10-80 wt.%, based on the total weight of the composition; and
b) a nitrite source in the form of a cultured vegetable extract that is obtained by inoculating a liquid vegetable extract selected from vegetable juice and vegetable juice concentrate with one or more micro-organisms capable of converting nitrate into nitrite; and incubation of the inoculated vegetable extract under conditions favorable to the growth of said micro-organism, said vegetable juice and/or vegetable juice concentrate being derived from food-grade plant material selected from celery, beet, spinach, lettuce, cabbage, cucumber, eggplant, mushroom, green pepper, butternut squash, zucchini, mixed salad greens, carrot, artichoke, green bean, lima bean, broccoli, cauliflower, collard green, com, mustard, okra, onion, Chinese pea pod, black eyed pea, green pea, potato, turnip, sauerkraut, radish;

wherein said meat treatment composition is a liquid having a pH value of 7.0 to 11; and
wherein the meat treatment composition contains 0.2-1.5 wt.% nitrite, based on the total weight of the composition.

As, will be understood by those skilled in the art, based on the foregoing, the compositions of the present invention are particularly suited for use as a food additive, more in particular for use in meat treatment. Hence, in accordance with the invention, the meat treatment composition as well as the components used to produce them are typically 'food grade', meaning that they are acceptable for use in foods and, more in particular, that they would be considered not to be harmful or toxic to a mammal upon consumption of the food products containing them, i.e. when applied at the levels taught herein.

In this document, the term 'buffered food acid component' is used to refer to a partially or completely neutralized food-grade organic acid. The buffered food acid component typically comprises salts of the respective food-grade organic acid(s), including acetic acid, optionally in combination with the corresponding food-grade organic acid(s) in free acid form. Since, in accordance with the present invention, the buffered food-grade acid exists as a solution, the buffered food acid component may also be viewed as a combination of acid anions and a stoichiometric amount of metal cations or a sub-stoichiometric amount of metal cations in combination with a corresponding amount of hydrogen ions. Whenever quantities of the buffered food acid component are given herein, the total quantity of free acid(s) and corresponding salts is referred to, unless specifically indicated otherwise.

Besides acetic acid, the buffered food acid component may (optionally) comprise food-grade organic acids selected from the group consisting of lactic acid, citric acid, propionic acid, malic acid, cinnamic acid and mixtures thereof.

In an embodiment of the invention, a meat treatment composition as defined herein is provided, wherein the buffered food acid component comprises buffered vinegar. The term vinegar is used to denote the liquid obtained by the acetous fermentation of an alcoholic liquid, containing at least 4 grams of acetic acid per 100 ml, in particular a vinegar that can be declared 'natural', e.g. in terms of the FDA guidelines. According to said guidelines "natural" means minimally processed and containing no synthetic ingredients or processing aids (cf. Food Labeling: Nutrient Content Claims General Principles, Petitions, Definitions of Terms, 56 Fed. Reg. at 60,466). **In** a preferred embodiment the preservative system comprises a non-neutralized, partly neutralized or completely neutralized vinegar selected from the group consisting of white vinegar, brandy vinegar, alcoholic vinegar, balsamic vinegar, wine vinegar, malt vinegar, beer vinegar, potato vinegar, rice vinegar, apple vinegar, cherry vinegar, and cane vinegar. In a particularly preferred embodiment of the invention, the vinegar is cane vinegar. In a preferred embodiment of the invention, the acetic acid content of the vinegar is at least 5 % (w/w), more preferably at least 7.5 % (w/w), even more preferably at least 10 % (w/w). It is also possible to make use of vinegar that has been pre-concentrated to a certain extent. Such products are commercially available and typically have an acetic acid content between 20 and 30 % (w/w). In a preferred embodiment of the invention, the acetic acid content of the vinegar is at least 20 % (w/w), more preferably at least 25 % (w/w), e.g. about 29 or 30 % (w/w). A common measure for indicating the acetic acid content of vinegar is the grain strength. The grain strength is the acetic acid content expressed in g/l, so 50 grain vinegar is about 5% (w/w) acetic acid. As will be appreciated by those skilled in the art, it is preferred that the vinegar is at least 200 grain, more preferably at least 250 grain. Often, commercial food-grade vinegars are offered at 200 grain and 300 grain. In one preferred embodiment of the invention, a 300 grain vinegar is used.

To partially or completely neutralize the food organic acid, the food-grade organic acid is combined with a (food-grade) alkalizing agent. Preferred alkalizing agents comprise metal hydroxides or metal salts or combinations thereof. Examples of metal hydroxides comprise sodium hydroxide, potassium hydroxide, calcium hydroxide or combinations thereof. An example of a metal salt comprises metal carbonate. Such compositions will comprise a mixture of free organic acid and one or more acid salts or such compositions will comprise one or more acid salts without free organic acid, depending on the relative amounts of the food-grade organic acid and the alkalizing agent, as will be understood by those skilled in the art.

In accordance with an embodiment of the invention, the meat treatment composition comprises a buffered vinegar, which typically is obtainable by combining a natural vinegar with an alkalizing agent, preferably a metal hydroxide as for example potassium hydroxide or calcium hydroxide or a metal salt, such as a metal carbonate. In a preferred embodiment of the invention, the buffered vinegar is obtainable by combining a natural vinegar with sodium hydroxide, potassium hydroxide, calcium hydroxide or a combination thereof.

The meat treatment compositions according to the present invention preferably have a total content of partially or completely neutralized food-grade organic acid of not more than 99.9 wt.%, based on the total dry solids weight of the composition, more preferably of not more than 99.5 wt.%, even more preferably within the range of 10-99 wt.%, still more preferably 15-98 wt.%, still more preferably 20-95 wt.%.

The meat treatment compositions according to the present invention preferably have a total content of a food grade acid selected from acetic acid, lactic acid, propionic acid, and mixtures thereof, in partially or completely neutralized form, of not more than 99.9 wt.%, based on the total dry solids weight of the composition, more preferably of not more than 99.5 wt.%, more preferably within the range of 10-99 wt.%, still more preferably 15-98 wt.%, still more preferably 20-95 wt.%

The meat treatment compositions according to the present invention have a total content of acetic acid in partially or completely neutralized form, of within the range of 10-80 wt.%, preferably 20-50 wt.%.

Preferably, the meat treatment composition according to the present invention, comprises the food-grade acid anions and metal cations in a molar ratio of at least 1:0.2, preferably at least 1:0.5, more preferably at least 1:0.75.

The meat treatment composition of the present invention further comprises a nitrite source in the form of a cultured vegetable extract. The nitrite source is a vegetable extract containing significant amounts of nitrate, which has been contacted and incubated with viable micro-organisms under conditions suitable for said micro-organisms to convert nitrate into nitrite by their inherent metabolism.

In this document the term "vegetable extract" is used to refer to a composition of matter derived from food-grade plant materials, typically by mainly physical treatment of plant material, such as by cutting, macerating, pressing, soli-liquid extractions, concentrating, drying, etc. According to the invention, the vegetable extract is a liquid fraction derived from food-grade plant materials, which may also be referred to as a vegetable juice. Embodiments are also envisaged wherein vegetable juice solids are provided in concentratedform.

The food-grade plant material may be any nitrate-containing plant containing a significant amount of nitrate. In one embodiment the plant material comprises fresh plant parts, such as, in particular, leafs, flowers, stems and/or roots.

Preferred plant materials contain a high concentration of natural nitrate. Thus, for example, the nitrate concentration of the plant material is at least about 100 ppm, e.g. at least about 200 ppm, at least about 300 ppm, at least about 400 ppm, at least about 500 ppm, at least about 600 ppm, or at least about 700 ppm. The nitrate concentration of the plant material is preferably 24,000 ppm or less, e.g., about 20,000 ppm or less, about 15,000 ppm or less, about 10,000 ppm or less, about 8000 ppm or less, about 5000 ppm or less, about 3000 ppm or less, about 2500 ppm or less, or about 2000 ppm or less.

Suitable plant materials include celery, beet, spinach, lettuce, cabbage, cucumber, eggplant, mushroom, green pepper, butternut squash, zucchini, mixed salad greens, carrot, artichoke, green bean, lima bean, broccoli, cauliflower, collard green, corn, mustard, okra, onion, Chinese pea pod, black eyed pea, green pea, potato, turnip, sauerkraut, and radish.. Any mixture or combination of plant materials can be used in accordance with the invention. In a particularly preferred embodiment the nitrite source is derived from celery juice or extract.

In a preferred embodiment of the invention, the vegetable extract has a nitrate concentration of at least about 100 ppm, e.g., at least about 200 ppm, at least about 300 ppm, at least about 400 ppm, at least about 500 ppm, at least about 600 ppm, or at least about 700 ppm. The nitrate concentration of vegetable extract is preferably 24,000 ppm or less, e.g. about 20,000 ppm or less, about 15,000 ppm or less, about 10,000 ppm or less, about 8000 ppm or less, about 5000 ppm or less, about 3000 ppm or less, about 2500 ppm or less, or about 2000 ppm or less.

In an advantageous embodiment of the invention the vegetable extract, juice or concentrate comprises celery extract, celery juice or celery concentrate. Suitable commercial products are available from commercial suppliers such as from Florida Food Products Inc., under the product names 'Veg Stable^{®} 501' and 'Veg Stable^{®} 502'; from Diana Naturals, under the product name 'Celery juice concentrate', and from Vegetable Juices, Inc.

Any organism capable of converting nitrate to nitrite can be used in the process of the present invention. Suitable organisms include but are not limited to yeast, fungi, and bacteria. The organism can be, for example, E. coli, Rhodobacter sphaeroides, Paracoccus pantotrophus, Wautersia eutropha, Bradyrhizobium japonicum, any Pseudomonas species, Campylobacter jejunii, Wollinella succinogenes, Haemophylus influenzae, Shewanella oneidensis, Desulfitobacterium hafniense, Rhodobacter capsulatus, Klebsiella pneumoniae, Bacillus subtilis, the genus Cyanobacteria, any Synechococcus species, the genus Haloferax, the genus Haloarcula, and Thermus thermophilus. Preferably, the organism is a single strain or combination of bacterial strains within the Micrococcaceae family, including Micrococcus and Staphylococcus, Gram-positive cocci, including Enterococcus, Lactococcus, Leuconostoc, Pediococcus, Streptococcus, and Staphylococcus, and all lactic acid bacteria. Examples of the organism or organisms useful in the context of the invention include M. varians, S. carnosus, S. vitulinus, S. xylosus or a combination thereof. Embodiments of the invention are also envisaged, wherein the conversion of nitrate into nitrite is accomplished using a suitable enzyme preparation, typically a preparation comprising nitrate reductase.

The nitrite source of the meat treatment composition according to the present invention is a composition obtained by a process comprising the steps of:
i) providing a liquid vegetable extract, said liquid vegetable extract being selected from a vegetable juice or a vegetable juice concentrate;
ii) inoculating the liquid vegetable extract with one or more micro-organisms capable of converting nitrate into nitrite; and
iii) incubating the inoculated vegetable extract under conditions favorable to the growth of said micro-organism to produce a cultured vegetable extract.

The incubating step is optionally followed by one or more purification steps. Optionally, the one or more purification steps of the cultured vegetable extract comprise centrifugation and/or filtration of the cultured vegetable extract, with the proviso that the purification does not result in a nitrite level, on dry solids weight basis, of above 90 %, above 80 %, above 70 % or above 60 %. In a preferred embodiment the process does not involve any processing aimed at purification or isolation of the nitrite, other than solid-liquid separation and/or concentration. In an embodiment, the cultured vegetable extract as obtained in step iii) is used directly as the nitrite source in the present meat treatment compositions.

Cultured vegetable extracts in accordance with the invention may typically contain, besides nitrite, sugars, fiber, protein, vitamins and calcium. In a preferred embodiment of the invention the nitrite source comprises at least 5 wt.%, based on the total dry solids weight of the composition, preferably at least 7.5 wt.%, more preferably at least 10 wt.% of one or more components selected from the group consisting of sugars, protein, fiber, vitamins and calcium. In a preferred embodiment of the invention the meat treatment composition comprises at least 0.5 wt.%, based on the total dry solids weight of the composition, preferably at least 1 wt.%, more preferably at least 2 wt.% of one or more components selected from the group consisting of sugars, protein, fiber, vitamins and calcium.

In an advantageous embodiment of the invention the vegetable extract comprises cultured celery extract, such as e.g. the products 'Veg Stable^{®} 504', 'Veg Stable^{®} 506' or 'Veg Stable^{®} 528', available Florida Food Products, Inc. and the products Accel 2000H and Accel XP, available from Kerry Inc.

The meat treatment composition of the present invention, in one embodiment, comprises nitrite in an amount of between 0.05 and 5 wt.%, based on the total dry solids weight of the composition, more preferably between 0.1 and 4 wt.%, most preferably 0.2 wt.% or 3 wt.%. In accordance with this embodiment, it is preferred that the molar ratio of the (partially or completely neutralized) food-grade acid(s) to nitrite is at least 3/1, preferably it is within the range of 5/1 -100./1, most preferably within the range of 20./1-40./1.

The meat treatment composition of the present invention, in another embodiment, comprises nitrite, nitrate or a mixture thereof in a combined amount of between 0.05 and 5 wt.%, based on the total dry solids weight of the composition, more preferably between 0.1 and 4 wt.%, most preferably 0.2 wt.% or 3 wt.%; in combination with viable nitrate converting micro-organisms, preferably a micro-organism as defined herein before, in an amount of at least 1000 cfu/kg of dry solids. In accordance with this embodiment, it is preferred that the molar ratio of the (partially or completely neutralized) food-grade acid(s) to the total amount of nitrite and nitrate is at least 3/1, preferably it is within the range of 5/1 -100./1, most preferably within the range of 20./1-40./1.

As will be clear to those skilled in the art, a buffered food acid component and/or a nitrite sources obtained by fermentation, may comprise detectable amounts of other dispersed or dissolved solids besides the acid component and/or the nitrite. Typical examples of such other dispersed or dissolved solids include sugars, such as glucose, fructose and sucrose; organic acids and/or salts thereof, such as lactic acid, citric acid, pyruvic acid, malic acid, succinic acid, formic acid and acetic acid; nitrogen containing substances, such as amino acids, peptides and proteins; nucleic acid components such as DNA and RNA fragments, nucleotides and nucleosides; cell membrane phospholipids; vitamins; trace elements; and pigments. Since the meat treatment composition of the invention will comprise one or more components produced using fermentative process, which components are typically used in non- or only partially purified form, the liquid meat treatment composition will typically comprise at least one, at least two, at least three, at least four or at least five components selected from the group consisting of fructose, glucose, sucrose, lactic acid and salts thereof, citric acid and salts thereof, pyruvic acid and salts thereof, malic acid and salts thereof, succinic acid and salts thereof, formic acid and salts thereof, acetic acid and salts thereof, propionic acids and salts thereof, amino acids, peptides and proteins. In a preferred embodiment of the invention the liquid meat treatment composition comprises at least 0.5 wt.%, based on the total dry solids weight of the composition, preferably at least 1 wt.%, more preferably at least 2 wt.% of one or more components selected from the group consisting of fructose, glucose, sucrose, citric acid and salts thereof, pyruvic acid and salts thereof, malic acid and salts thereof, succinic acid and salts thereof, formic acid and salts thereof, acetic acid and salts thereof, propionic acids and salts thereof, amino acids, peptides and proteins.

In an embodiment of the invention, the meat treatment composition as defined herein does not contain substantial amounts of phosphate. More preferably, the meat treatment composition of the invention, comprises less than 5 wt.%, based on the total dry solids weight of the composition, of phosphate, preferably less than 1 wt.%, more preferably less than 0.5 wt.%.

In some embodiments salt may be added to the meat treatment composition as an additional curing agent. In some embodiments, meat treatment compositions are provided comprising more than 0.1 wt.%, more than 0.5 wt.%, more than 1.0 wt.%, more than 2.5 wt.% or more than 5 wt.% of salt, based on the total dry solids weight of the composition

The concentrated liquid meat treatment composition of the present invention can be produced intended for dilution with water prior to use. This is particularly convenient when the meat treatment is not performed at the site where the meat treatment composition is produced, so as to reduce the volume of water in the product to be stored and transported, which has obvious advantages.

The meat treatment composition that is formulated as a concentrated liquid, is referred to as a 'concentrate'. The concentrate typically comprises a buffered food acid component and a nitrite source in combination with water. Such concentrates are typically intended for dilution with water before use. Such concentrates preferably have a total dry solids content within the range of 7-100 wt.%, most preferably within the range of 10-45 wt.%. Such concentrates will typically comprise a total amount of partially or completely neutralized food-grade organic acid, based on the total weight of the composition, within the range of 10-80 wt.%, most preferably within the range of 10-50 wt.%. Such concentrates will typically comprise nitrite, based on the total weight of the concentrate, in an amount within the range of 0.2-1.5 wt.%, most preferably within the range of 0.2-0.75 wt.%. In an embodiment, such concentrates will comprise nitrite and nitrate in a combined amount of at least 0.1 wt.%, based on the total weight of the concentrate, more preferably in an amount within the range of 0.15-1.5 wt.%, most preferably within the range of 0.2-0.75 wt.%.

In an embodiment of the invention, a ready-to-use liquid is provided comprising the meat treatment composition as defined herein. For ease of reference, such ready-to-use liquids are also referred to herein as 'brine'. In accordance with the invention, the brine will typically have a total dry solids content of at least 3 wt.%, more preferably within the range of 5-100 wt.%, most preferably within the range of 20-40 wt.%. In an embodiment of the invention, the ready-to-use liquid has a pH of 6.0 or higher . Such brines will typically comprise a total amount of partially or completely neutralized food-grade organic acid, of at least 1 wt.%, based on the total weight of the composition, more preferably within the range of 1.5-10 wt.%, most preferably within the range of 2-5 wt.%. Such brines will typically comprise nitrite in an amount of at least 0.01 wt.%, based on the total weight of the brine, more preferably in an amount within the range of 0.025-0.1 wt.%, most preferably within the range of 0.04-0.07 wt.%. In an embodiment, such brines will comprise nitrite and nitrate in a combined amount of at least 0.01 wt.%, based on the total weight of the brine, more preferably in an amount within the range of 0.025-0.1 wt.%, most preferably within the range of 0.04-0.07 wt.%.

The meat treatment compositions according to the present invention have a pH of 7-11preferably7-10.

The meat treatment compositions of the invention are typically produced by combining the buffered food acid component with the nitrite source. Compositions that can suitably be used as the buffered food acid component and the nitrite source in accordance with the invention are commercially available. The buffered food acid component as well as the nitrite source can be used in liquid as well as in solid form.

Hence, according to a second aspect of the invention a method of producing a meat treatment composition as described herein before is provided. The method comprises the steps of combining:
a) a buffered food acid component, comprising partially or completely neutralized food-grade acetic acid; and
b) a nitrite source in the form of a cultured vegetable extract.

In the method described, the pH of the composition is adjusted to obtain a value within the ranges described herein before. If the pH needs to be increased this is preferably done by adding an appropriate amount of an alkali metal hydroxide. If it is desired to lower the pH of the meat treatment composition after combining the buffered food acid component and the nitrite source, this may suitably be done using an appropriate amount of the food acid, i.e. in free acid form, even though the use of mineral acids for this purpose is not excluded.

In the present method both the buffered food acid component and the nitrite source may be used in liquid or dry powder form. If one or both of the components are used in dry powder form, it is envisaged that the method comprises reconstitution of the respective components in a suitable quantity of water, e.g. in tap water, before combining it with the other component. Embodiments are also envisaged wherein both components are in dry powder form and are blended and subsequently reconstituted in water.

In the method of the invention, the ingredients are typically agitated for a period of time sufficient to form a homogeneous liquid, which may be a dispersion or solution.

A third aspect of the invention concerns a method of treating meat to increase the resistance of microbial spoilage and/or to enhance reddening of meat and/or to reduce and/or compensate for moisture loss during cooking and/or during other kinds of processing, such as cooking, refrigerating, cooling, freezing, thawing and/or storage of meat.

In an embodiment of the invention, a method as defined herein is provided, wherein the meat is treated with a meat treatment composition of the invention, typically in the form of a liquid referred to here above as the 'ready-to-use liquid' or 'brine'.

The method of the invention comprises the steps of:
a) providing a quantity of meat, for example fresh or uncooked meat;
b) providing a meat treatment composition as defined herein; and
c) treating said meat with the meat treatment composition.

The method according to the present invention is suitable and beneficial for the treatment of most conventional meat products typically offered for human consumption, regardless of the source and/or form in which it is offered.

In an embodiment of the invention, the meat is selected from the group consisting of whole muscle meat, cuts or slices of whole muscle meat, ground or comminuted muscle meat and emulsified meat. In a preferred embodiment of the invention the meat is fresh meat, which may be in the form of whole muscle meat, cuts or slices of whole muscle meat or ground or comminuted muscle meat. In this context the term 'fresh' means that the meat has not been treated by cooking in between removal from the animal carcass and the treatment according to the invention. In a preferred embodiment, the meat is uncooked meat. Embodiments are envisaged wherein the meat has been stored, typically under refrigeration for some time in between removal from the animal carcass and the treatment according to the invention.

In an embodiment of the invention, the meat is obtained from beef cattle, pork, lamb, poultry, and game, most preferably from pork, chicken and turkey.

The actual amount of brine used for treating meat and/or the weight gain of the meat will vary depending on the method of treating the meat, the type of meat, and the particular meat treatment composition used.

In accordance with certain embodiments of the invention, the meat is treated with a sufficient amount of the brine and in a manner sufficient to cause a weight increase in the range of 2-20%, more preferably in the range of 5-15%.

In accordance with certain embodiments of the invention, the meat is treated with a composition in the form of a liquid brine as defined herein before, in quantities providing a weight ratio of brine to meat within the range of 1/10-1/2, preferably within the range of 1/8-1/3, more preferably within the range of 1/7-1/4.

In accordance with certain embodiments of the invention, the meat is treated with a brine as defined herein before, in quantities providing a level of nitrite of between 2 mg per kg of meat and 800 mg per kg of meat, preferably a level of nitrite between 4 mg per kg of meat and 600 mg per kg of meat, more preferably a level of nitrite between 5 mg per kg of meat and 500 mg per kg of meat.

In accordance with certain embodiments of the invention, the meat is treated with a brine as defined herein before, in quantities providing a level of the food-grade buffered acid of between 1000 mg per kg of meat and 10000 mg per kg of meat, preferably a level of nitrite between 2000 mg per kg of meat and 9000 mg per kg of meat, more preferably a level of nitrite between 3000 mg per kg of meat and 8000 mg per kg of meat as for example a level of nitrite of 6000 mg per kg meat (6000 ppm).

The methods for treating the meat may utilize any method that is known and/or conventionally used for combining fresh meat and a brine product. For example, meat may be treated with the composition of the invention by dispersing it throughout the fresh meat. Suitable methods include injecting, pumping, spraying, soaking, dipping or otherwise dispersing the composition into or onto the meat. In addition, the method may comprise tumbling, kneading, massaging or otherwise manipulate the meat to further disperse the composition throughout the meat. In some embodiments, the composition is injected under pressure into the meat as part of an automated commercial meat production step. Suitable injectors may be set to pump a particular volume of the composition into each piece of meat.

In the case of comminuted or emulsified meat, the brine may simply be added to the meat followed by tumbling, kneading or massaging of the meat so as to cause the brine to be evenly distributed throughout the meat. The treated meat may then be molded or otherwise shaped to form any number of food products including patties, sausages, wieners and luncheon meats.

Once the brine has been dispersed throughout the meat, the meat may subsequently be cooked until the desired internal temperature is reached, packaged and refrigerated or frozen. Alternatively, once the brine has been dispersed throughout the meat, the meat may be packaged, cooked then refrigerated or frozen. Hence, in an embodiment of the invention, a method as defined herein is provided, further comprising one or more of the following steps (in any order/sequence):
d) forming the meat into shaped food products;
e) cooking the meat;
f) refrigerating or freezing the meat; and
g) packaging the meat.

The invention has been described by reference to certain embodiments discussed above. It will be recognized that these embodiments are susceptible to various modifications and alternative forms well known to those of skill in the art.

Many modifications in addition to those described above may be made to the structures and techniques described herein without departing from the spirit and scope of the invention. Accordingly, although specific embodiments have been described, these are examples only and are not limiting upon the scope of the invention.

Furthermore, for a proper understanding of this document and in its claims, it is to be understood that the verb "to comprise" and its conjugations is used in its nonlimiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

All patent and literature references cited in the present specification are hereby incorporated by reference in their entirety.

The following examples are offered for illustrative purposes only, and are not intended to limit the scope of the present invention in any way.

### EXAMPLES

### Example 1: Preparation of a liquid meat treatment composition

As food acid components vinegar sold under the name Verdad^{®} N5 or Verdad^{®} N16, manufactured by Corbion, is used. A buffered food acid is obtainable by neutralizing Verdad^{®} N5 or Verdad^{®} N16 with a 50 % KOH or 50 % NaOH solution to a pH of 5.7 and 7.8 respectively.

A suitable cultured celery extract is commercially available under the tradename Veg Stable Veg Stable^{®} 528, manufactured by Florida Food Products Inc.

The meat treatment composition is obtainable by combining vinegar neutralized with KOH or NaOH followed by a blending with Veg Stable^{®} 528.

### Example 2: Enhanced stability of nitrite in the meat treatment composition

The performance of six different meat treatment compositions (composition A to F) is evaluated :
- Composition A comprises 2000 g celery ferment (Veg Stable ^{®}528);
- Composition B comprises 1466 g vinegar (Verdad^{®} N5) and 533.35 g celery ferment (Veg Stable ^{®}528);
- Composition C comprises 1526.7 g of buffered vinegar to a pH of 7 (Verdad^{®}N5 neutralized with 50 % KOH to a pH of 7) and 473.47 g celery ferment (Veg Stable^{®} 528);
- Composition D comprises 1542.8 g of buffered vinegar to a pH of 8 (Verdad^{®} N5 neutralized with 50 % KOH to a pH of 8) and 458.26 g celery ferment (Veg Stable^{®} 528);
- Composition E comprises 720.8 g of a buffered vinegar as in composition D, which was concentrated to a dry matter content of 63% and 479.96 g celery ferment (Veg Stable^{®} 528); and
- Composition F comprises 1636.35 g Verdad^{®} N16 and 363.68 g celery ferment (Veg Stable^{®} 528).

The percentage of the celery ferment together with the theoretical nitritre content (in ppm) and the measured nitrite content immediately after preparation of the meat treatment composition (time t=0) are shown in Table 1. The content of nitrite is for example measured with a high performance liquid chromatography (HPLC) anion method.

**Table 1**

| | **A** | **B** | **C** | **D** | **E** | **F** |
|---|---|---|---|---|---|---|
| wt% celery ferment | 100 | 26.67 | 23.67 | 22.90 | 39.97 | 18.18 |
| Theoretical NO2⁻ (ppm) | 15000 | 4000 | 3551 | 3435 | 5996 | 2728 |
| Measured NO2⁻ (ppm) at t=0 | 13050 | 2315 | 2990 | 3000 | 5575 | 2390 |

The stability of the nitrite in function of the time is determined of the compositions A to F by measuring the nitrite content after 1 week, 2 weeks, 4 weeks, 6 weeks, 8 weeks and 13 weeks.

The measured nitrite content is expressed as the percentage compared with the nitrite content at t=0.

**Table 2**

| | | **Nitrite compared expressed as % of nitrite content at t=0 Time (in weeks)** | | | | | | |
|---|---|---|---|---|---|---|---|---|
| **Composition** | **T (°C)** | **0** | **1** | **2** | **4** | **6** | **8** | **13** |
| A | 4°C | 100 | 98 | 99 | 103 | 102 | 102 | 98 |
| pH = 9.2 | 20°C | 100 | 101 | 100 | 103 | 102 | 100 | 97 |
| | 40°C | 100 | 97 | 94 | 81 | 83 | 66 | 46 |
| B | 4°C | 100 | 87 | 77 | #N/B* | #N/B | #N/B | #N/B |
| pH = 5.6 | 20°C | 100 | 60 | 48 | #N/B | #N/B | #N/B | #N/B |
| | 40°C | 100 | 12 | 1 | #N/B | #N/B | #N/B | #N/B |
| C | 4°C | 100 | 94 | 93 | #N/B | #N/B | #N/B | #N/B |
| pH = 7.1 | 20°C | 100 | 93 | 84 | #N/B | #N/B | #N/B | #N/B |
| | 40°C | 100 | 65 | 58 | #N/B | #N/B | #N/B | #N/B |
| D | 4°C | 100 | 98 | 98 | 98 | 99 | 98 | 97 |
| pH = 9.1 | 20°C | 100 | 98 | 99 | 96 | 97 | 97 | 95 |
| | 40°C | 100 | 95 | 96 | 99 | 94 | 89 | 83 |
| E | 4°C | 100 | 100 | 95 | 93 | 94 | 94 | 93 |
| pH = 9.9 | 20°C | 100 | 102 | 96 | 94 | 94 | 95 | 94 |
| | 40°C | 100 | 98 | 95 | 91 | 92 | 94 | 91 |
| F | 4°C | 100 | 100 | 100 | 98 | 96 | 96 | 92 |
| pH = 8.4 | 20°C | 100 | 100 | 97 | 107 | 93 | 95 | 92 |
| | 40°C | 100 | 97 | 94 | 79 | 82 | 81 | 69 |

| | | | | | | | | |
|---|---|---|---|---|---|---|---|---|
| *#N/B: result not available | | | | | | | | |

From Table 2 it can be concluded that the composition D, E and F show a good stability of nitrite even after 6, 8 or 13 weeks.

Compared to composition F, compositions D and E show a better stability of nitrite at a temperature of 40 °C.

After 26 weeks and 52 weeks storage at 4°C or 20°C, the nitrite content of composition D was still found to be very close to 100%.

### Example 3: Application of meat treatment compositions in pork ham

Brines were prepared on the basis of the recipes shown in in Table 3, using composition B and composition D of Example 2. Composition B and D were applied at equal dosage levels of celery ferment and acetate/acetic acid.

**Table 3**

| | **Wt.%** | |
|---|---|---|
| | **1** | **2** |
| Water | 65.25 | 62.75 |
| Sodium chloride | 9.0 | 9.0 |
| Sugar | 8.50 | 8.50 |
| Sodium phosphate | 2.00 | 2.00 |
| Sodium erythorbate | 0.25 | 0.25 |
| Composition B | 15.00 | 0.00 |
| Composition D | 0.00 | 17.50 |

Brine 1 had a pH of 5.2. Brine 2 had a pH of 7.9

Ham was treated with these brines according to the following procedure:
- Macerate ham muscle using LEM tenderizer
- Make brine by mixing all remaining ingredients together
- Vacuum tumble macerated ham muscle with brine in Marinade express vacuum tumbler for 30 minutes
- Stuff tumbled ham into plastic casings using F. Dick electric stuffer
- Cook stuffed ham in Enviro-pak oven using the Ready-to-eat Deli meat cook schedule
- Cool cooked meat overnight in Cold room (36.5 °F)
- Slice into 25 g slices and vacuum pack.

The cooking yield was found to be higher for the composition according to the invention than for the reference composition, namely 99.4% (composition 2) against 97.2% (composition 1). After the ham slices were prepared and vacuum packed for storage, color samples were stored under lighted conditions to simulate grocery store conditions for 14 days before taking color measurements (L*a*b) values. Color measurements *L**, *a**, *b** color values were taken using a Miniscan EZ 4500L (HunterLab, Reston, VA, USA). Color was measured on two places per slice of ham and on three slices per measurement and according to the American Meat Science Association Meat Color Measurement Guidelines. 2012. The values presented are the average values of those six separate measurements (Table 4)..

**Table 4**

| **Lab color values** | **1** | **2** |
|---|---|---|
| L* | 67.5 | 56.9 |
| a* | 9.1 | 13.4 |
| b* | 11.0 | 11.6 |

The measured Lab color values confirmed what was clearly visible to the naked eye, i.e. the ham pieces treated with brine 2 had retained most of the original reddish color, whereas the ham pieces treated with brine 1 had become much more pale during storage.

### Example 4: Application of meat treatment compositions in pork ham

Brines were prepared on the basis of the recipes shown in in Table 5.

**Table 5**

| | **Wt.%** | |
|---|---|---|
| | **1** | **2** |
| Water | 64.4 | 61.9 |
| Sodium chloride | 9.0 | 9.0 |
| Sugar | 8.50 | 8.50 |
| Cherry juice powder | 2.10 | 2.10 |
| Carrageenan | 1.00 | 1.00 |
| Composition B | 15.00 | 0.00 |
| Composition D | 0.00 | 17.50 |

Pieces of pork ham were prepared in the same way as in Example 3. The ham yield after cooking was found to be 96.5% for the reference composition 1 and 98.1% for composition 2 (composition according to the invention). The color of the treated ham pieces was monitored under the same conditions as in Example 3. The Lab color values of the ham pieces were measured directly after brine treatment and after 7 days of storage

**Table 6**

| **Storage time [days]** | **Lab color values** | **1** | **2** |
|---|---|---|---|
| 0 | L* | 58.87 | 55.31 |
| | a* | 15.15 | 15.33 |
| | b* | 15.41 | 15.40 |
| 7 | L* | 57.44 | 54.49 |
| | a* | 14.45 | 15.09 |
| | b* | 16.79 | 14.71 |

## Claims

1. Meat treatment composition comprising a combination of:
a) a buffered food acid component, comprising a total amount of partially or completely neutralized acetic acid of 10-80 wt.%, based on the total weight of the composition; and
b) a nitrite source in the form of a cultured vegetable extract that is obtained by inoculating a liquid vegetable extract selected from vegetable juice and vegetable juice concentrate with one or more micro-organisms capable of converting nitrate into nitrite; and incubation of the inoculated vegetable extract under conditions favorable to the growth of said micro-organism, said vegetable juice and/or vegetable juice concentrate being derived from food-grade plant material selected from celery, beet, spinach, lettuce, cabbage, cucumber, eggplant, mushroom, green pepper, butternut squash, zucchini, mixed salad greens, carrot, artichoke, green bean, lima bean, broccoli, cauliflower, collard green, corn, mustard, okra, onion, Chinese pea pod, black eyed pea, green pea, potato, turnip, sauerkraut, radish;
wherein said meat treatment composition is a liquid having a pH value of 7.0 to 11; and wherein the meat treatment composition contains 0.2-1.5 wt.% nitrite, based on the total weight of the composition.

2. Meat treatment composition according to claim 1, comprising nitrite in an amount of not more than 0.75 wt.%, based on the total weight of the composition.

3. Meat treatment composition according to claim 1 or 2, comprising a total amount of partially or completely neutralized acetic acid, of not more than 50 wt.%, based on the total weight of the composition.

4. Meat treatment composition according to any one of the preceding claims, wherein the molar ratio of the partially or completely neutralized acetic acid to nitrite is in the range of 3:1 to 100:1.

5. Meat treatment composition according to claim 4, wherein the cultured vegetable extract is cultured celery extract or cultured celery juice.

6. Meat treatment composition according to any one of the preceding claims, wherein the buffered food acid component comprises a buffered vinegar.

7. Meat treatment composition according to claim any one of the preceding claims, having a dry solids content of at least 5 wt.%.

8. Meat treatment composition according to claim any one of the preceding claims, having a pH of not more than 10.

9. Method of producing a meat treatment composition as defined in any one claims 1-8, said method comprising the step of combining:
a) a buffered food acid component, comprising partially or completely neutralized acetic acid; and
b) a nitrite source in the form of a cultured vegetable extract.

10. Method according to claim 9, wherein the buffered food acid component is buffered vinegar.

11. Method according to claim 9 or claim 10, wherein the cultured vegetable extract is a composition obtainable by a process comprising the steps of i) providing liquid vegetable extract; ii) inoculating the liquid vegetable extract with one or more micro-organisms capable of converting nitrate into nitrite; and incubating the inoculated vegetable extract under conditions favorable to the growth of said micro-organism to produce a cultured vegetable extract; optionally followed by extraction of the liquid from the cultured vegetable extract, optionally followed by purification the extracted liquid, with the proviso that the purification does not result in a nitrite level, on dry solids weight basis, of above 80 %.

12. Method of treating meat, said method comprising the steps of:
a) providing a quantity of meat;
b) providing a meat treatment composition as defined in any one of claims 1-8; and
c) treating said meat with the meat treatment composition.

13. Method according to claim 12, wherein the quantities of the meat and the meat treatment composition provide a level of nitrite of between 2 and 800 mg/kg of the uncooked meat.

14. Method according to claim 12 or 13, further comprising one or more of the following steps:
d) forming the meat into a shaped food product;
e) cooking the meat;
f) refrigerating or freezing the meat; and
g) packaging the meat.

15. Method according to any one of claims 12-14, wherein the uncooked meat is whole muscle meat, ground meat, comminuted meat or emulsified meat.

## Patentansprüche

1. Fleischbehandlungszusammensetzung, umfassend eine Kombination aus:
a) einer gepufferten Lebensmittelsäurekomponente, umfassend eine Gesamtmenge von teilweise oder vollständig neutralisierter Essigsäure von 10-80 Gew.-%, basierend auf dem Gesamtgewicht der Zusammensetzung; und
b) einer Nitritquelle in der Form eines kultivierten Gemüseextrakts, der durch Inokulation eines flüssigen Gemüseextrakts, ausgewählt aus Gemüsesaft und Gemüsesaftkonzentrat, mit einem oder mehr Mikroorganismen, die in der Lage sind Nitrat in Nitrit umzuwandeln; und Inkubation des inokulierten Gemüseextrakts unter Bedingungen, die für das Wachstum des Mikroorganismus vorteilhaft sind, erhalten wird, der Gemüsesaft und/oder das Gemüsesaftkonzentrat abgeleitet sind/ist aus lebensmitteltauglichem Pflanzenmaterial, ausgewählt aus Sellerie, Rüben, Spinat, Salat, Kohl, Gurke, Aubergine, Pilz, grüner Paprika, Butternutt-Kürbis, Zucchini, gemischtem Salatgrün, Karotte, Artischocke, grüner Bohne, Limabohne, Brokkoli, Blumenkohl, Grünkohl, Mais, Senf, Okra, Zwiebel, chinesischer Erbsenschote, Schwarzaugenbohnen, grüner Erbse, Kartoffel, Speiserübe, Sauerkraut, Rettich;
wobei die Fleischbehandlungszusammensetzung eine Flüssigkeit, die einen pH-Wert von 7,0 bis 11 aufweist, ist; und wobei die Fleischbehandlungszusammensetzung 0,2-1,5 Gew.-% Nitrit, basierend auf dem Gesamtgewicht der Zusammensetzung, enthält.

2. Fleischbehandlungszusammensetzung nach Anspruch 1, umfassend Nitrit in einer Menge von nicht mehr als 0,75 Gew.-%, basierend auf dem Gesamtgewicht der Zusammensetzung.

3. Fleischbehandlungszusammensetzung nach Anspruch 1 oder 2, umfassend eine Gesamtmenge von teilweise oder vollständig neutralisierter Essigsäure von nicht mehr als 50 Gew.-%, basierend auf dem Gesamtgewicht der Zusammensetzung.

4. Fleischbehandlungszusammensetzung nach einem der vorstehenden Ansprüche, wobei das Molverhältnis der teilweisen oder vollständig neutralisierten Essigsäure zu Nitrit im Bereich von 3:1 bis 100:1 ist.

5. Fleischbehandlungszusammensetzung nach Anspruch 4, wobei der kultivierte Gemüseextrakt kultivierter Sellerieextrakt oder kultivierter Selleriesaft ist.

6. Fleischbehandlungszusammensetzung nach einem der vorstehenden Ansprüche, wobei die gepufferte Lebensmittelsäurekomponente einen gepufferten Essig umfasst.

7. Fleischbehandlungszusammensetzung nach einem der vorstehenden Ansprüche, die einen Trockenfeststoffgehalt von zumindest 5 Gew.-% aufweist.

8. Fleischbehandlungszusammensetzung nach einem der vorstehenden Ansprüche, die einen pH-Wert von nicht mehr als 10 aufweist.

9. Verfahren zur Herstellung einer Fleischbehandlungszusammensetzung, wie in einem der Ansprüche 1-8 definiert, das Verfahren umfassend den Schritt des Kombinierens:
a) einer gepufferten Lebensmittelsäurekomponente, umfassend teilweise oder vollständig neutralisierte Essigsäure; und
b) einer Nitritquelle in der Form eines kultivierten Gemüseextrakts.

10. Verfahren nach Anspruch 9, wobei die gepufferte Lebensmittelsäurekomponente gepufferter Essig ist.

11. Verfahren nach Anspruch 9 oder Anspruch 10, wobei der kultivierte Gemüseextrakt eine Zusammensetzung ist, die durch einen Prozess, umfassend die Schritte von i) Bereitstellen flüssigen Gemüseextrakts; ii) Inokulieren des flüssigen Gemüseextrakts mit einem oder mehr Mikroorganismen, die in der Lage sind, Nitrat in Nitrit umzuwandeln; und Inkubieren des inokulierten Gemüseextrakts unter Bedingungen, die für das Wachstum des Mikroorganismus vorteilhaft sind, um einen kultivierten Gemüseextrakt herzustellen; optional gefolgt von Extraktion der Flüssigkeit aus dem kultivierten Gemüseextrakt, optional gefolgt von Reinigung der extrahierten Flüssigkeit, mit dem Vorbehalt, dass die Reinigung nicht in einem Nitritlevel, auf Trockenfeststoffgewichtsbasis, von über 80 % resultiert, erhaltbar ist.

12. Verfahren zur Behandlung von Fleisch, das Verfahren umfassend die Schritte von:
a) Bereitstellen einer Quantität von Fleisch;
b) Bereitstellen einer Fleischbehandlungszusammensetzung, wie in einem der Ansprüche 1-8 definiert; und
c) Behandeln des Fleisches mit der Fleischbehandlungszusammensetzung.

13. Verfahren nach Anspruch 12, wobei die Quantitäten des Fleisches und der Fleischbehandlungszusammensetzung ein Nitritlevel von zwischen 2 und 800 mg/kg des ungekochten Fleisches bereitstellen.

14. Verfahren nach Anspruch 12 oder 13, ferner umfassen einen oder mehrere der folgenden Schritte:
d) Bilden des Fleisches in ein geformten Lebensmittelprodukt;
e) Kochen des Fleisches;
f) Kühlen oder Gefrieren des Fleisches; und
g) Verpacken des Fleisches.

15. Verfahren nach einem der Ansprüche 12-14, wobei das ungekochte Fleisch ganzes Muskelfleisch, Hackfleisch, zerkleinertes Fleisch oder emulgiertes Fleisch ist.

## Revendications

1. Composition de traitement de la viande comprenant une combinaison de :
a) un composant acide alimentaire tamponné, comprenant une quantité totale d'acide acétique partiellement ou complètement neutralisé de 10 à 80 % en poids, par rapport au poids total de la composition ; et
b) une source de nitrite sous la forme d'un extrait végétal cultivé qui est obtenu en inoculant un extrait végétal liquide choisi parmi un jus de légumes et un concentré de jus de légumes avec un ou plusieurs micro-organismes capables de convertir le nitrate en nitrite ; et en incubant l'extrait végétal inoculé dans des conditions favorables à la croissance dudit micro-organisme, ledit jus de légumes et/ou concentré de jus de légumes étant issu de matières végétales de qualité alimentaire choisies parmi le céleri, la betterave, les épinards, la laitue, le chou, le concombre, l'aubergine, le champignon, le poivron vert, la courge musquée, la courgette, le mélange de salades vertes, la carotte, l'artichaut, le haricot vert, le haricot de Lima, le brocoli, le chou-fleur, le chou vert, le maïs, la moutarde, le gombo, l'oignon, le pois gourmand, le niébé, le pois vert, la pomme de terre, le navet, la choucroute, le radis ;
où ladite composition de traitement de la viande est un liquide ayant un pH compris entre 7,0 et 11 ; et où la composition de traitement de la viande contient entre 0,2 et 1,5 % en poids de nitrite, par rapport au poids total de la composition.

2. Composition de traitement de la viande selon la revendication 1, comprenant du nitrite en une quantité ne dépassant pas 0,75 % en poids, par rapport au poids total de la composition.

3. Composition de traitement de la viande selon la revendication 1 ou 2, comprenant une quantité totale d'acide acétique partiellement ou complètement neutralisé, ne dépassant pas 50 % en poids, par rapport au poids total de la composition.

4. Composition de traitement de la viande selon l'une quelconque des revendications précédentes, où le rapport molaire entre l'acide acétique partiellement ou complètement neutralisé et le nitrite est compris entre 3:1 et 100:1.

5. Composition de traitement de la viande selon la revendication 4, où l'extrait végétal cultivé est un extrait de céleri cultivé ou un jus de céleri cultivé.

6. Composition de traitement de la viande selon l'une quelconque des revendications précédentes, où le composant acide alimentaire tamponné comprend un vinaigre tamponné.

7. Composition de traitement de la viande selon l'une quelconque des revendications précédentes, ayant une teneur en matière sèche d'au moins 5 % en poids.

8. Composition de traitement de la viande selon l'une quelconque des revendications précédentes, ayant un pH ne dépassant pas 10.

9. Procédé de production d'une composition de traitement de la viande telle que définie dans l'une quelconque des revendications 1 à 8, ledit procédé comprenant l'étape consistant à combiner :
a) un composant acide alimentaire tamponné, comprenant de l'acide acétique partiellement ou complètement neutralisé ; et
b) une source de nitrite sous la forme d'un extrait végétal cultivé.

10. Procédé selon la revendication 9, où le composant acide alimentaire tamponné est du vinaigre tamponné.

11. Procédé selon la revendication 9 ou la revendication 10, où l'extrait végétal cultivé est une composition pouvant être obtenue par un procédé comprenant les étapes consistant à i) fournir un extrait végétal liquide ; ii) inoculer l'extrait végétal liquide avec un ou plusieurs micro-organismes capables de convertir le nitrate en nitrite ; et incuber l'extrait végétal inoculé dans des conditions favorables à la croissance dudit micro-organisme afin de produire un extrait végétal cultivé ; suivie éventuellement par l'extraction du liquide de l'extrait végétal cultivé, suivie éventuellement par la purification du liquide extrait, à condition que la purification n'entraîne pas un niveau de nitrite, sur la base du poids de matière sèche, supérieur à 80 %.

12. Procédé de traitement de la viande, ledit procédé comprenant les étapes de :
a) fournir une quantité de viande ;
b) fournir une composition de traitement de la viande telle que définie dans l'une quelconque des revendications 1 à 8 ; et
c) traiter ladite viande avec la composition de traitement de la viande.

13. Procédé selon la revendication 12, où les quantités de la viande et de la composition de traitement de la viande fournissent un niveau de nitrite compris entre 2 et 800 mg/kg de viande non cuite.

14. Procédé selon la revendication 12 ou 13, comprenant en outre une ou plusieurs des étapes suivantes :
d) transformer la viande en un produit alimentaire mis en forme ;
e) cuire la viande ;
f) réfrigérer ou congeler la viande ; et
g) emballer la viande.

15. Procédé selon l'une quelconque des revendications 12 à 14, où la viande non cuite est de la viande tout muscle, de la viande hachée, de la viande broyée ou de la viande émulsionnée.
